# FASCICULE DE BREVET EUROPEEN

(11) **EP 0 422 555 B1**
(45) Date de publication et mention de la délivrance du brevet: **25.01.1995**
(21) Numéro de dépôt: 90119252.6
(22) Date de dépôt: 08.10.1990
(51) Int. Cl.: B01D 45/14, B04B 5/12

(54) **Epurateur centrifuge pour flux gazeux et procédé appliqué dans cet épurateur**
Zentrifuge zur Reinigung von Gasströmen und bei diesem Reiniger angewendetes Verfahren
Centrifugal scrubber for gaseous streams and process employed in that scrubber

(30) Priorité: 12.10.1989 FR 8913343
(43) Date de publication de la demande: 17.04.1991
(73) Titulaire: GEC ALSTHOM SA, 75116 Paris (FR)
(72) Inventeur: Bouchard, Christian, F-93310 Le Pré Saint Gervais (FR); Brulez, François, F-75017 Paris (FR)
(74) Mandataire: Weinmiller, Jürgen

(56) Documents cités:
- EP-A- 0 227 089
- GB-A- 186 631
- US-A- 2 453 593

## Description

La présente invention concerne un épurateur centrifuge selon le préambule de la revendication 1. Un tel épurateur est connu par exemple à partir du document GB 186 631. L'invention s'applique notamment à l'épuration de flux d'air tels que des aérosols qui apparaissent dans de nombreuses industries, par exemple dans les industries pharmaceutiques ou alimentaires, ou des fumées d'usines avant leur introduction au bas d'une cheminée d'évacuation, ou de l'air qui est introduit dans des salles dites "blanches" pour en assurer l'aération par exemple dans des hôpitaux, des laboratoires de semi-conducteurs, etc.. Elle apparaît particulièrement avantageuse quand les particules à extraire ont des dimensions de quelques microns ou voisines du micron.

Certains épurateurs connus pour assurer de telles fonctions sont complexes et coûteux. D'autres présentent une efficacité insuffisante surtout lorsqu' il s'agit des particules les plus fines, qui sont les plus difficiles à extraire d'un flux gazeux.

La présente invention a notamment pour but d'améliorer cette efficacité à l'aide d'un épurateur simple quant à sa fabrication et quant à son entretien.

Ce but est atteint selon l'invention par l'épurateur tel que défini par la revendication 1.

En ce qui concerne des exemples d'une mise en oeuvre préférée, référence est faite aux revendications secondaires.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence.

La figure 1 représente une vue d'un premier épurateur selon la présente invention, la chambre de centrifugation étant vue en coupe axiale.

La figure 2 représente une vue de la chambre de séparation du même épurateur en coupe transversale selon une ligne II-II de la figure 1.

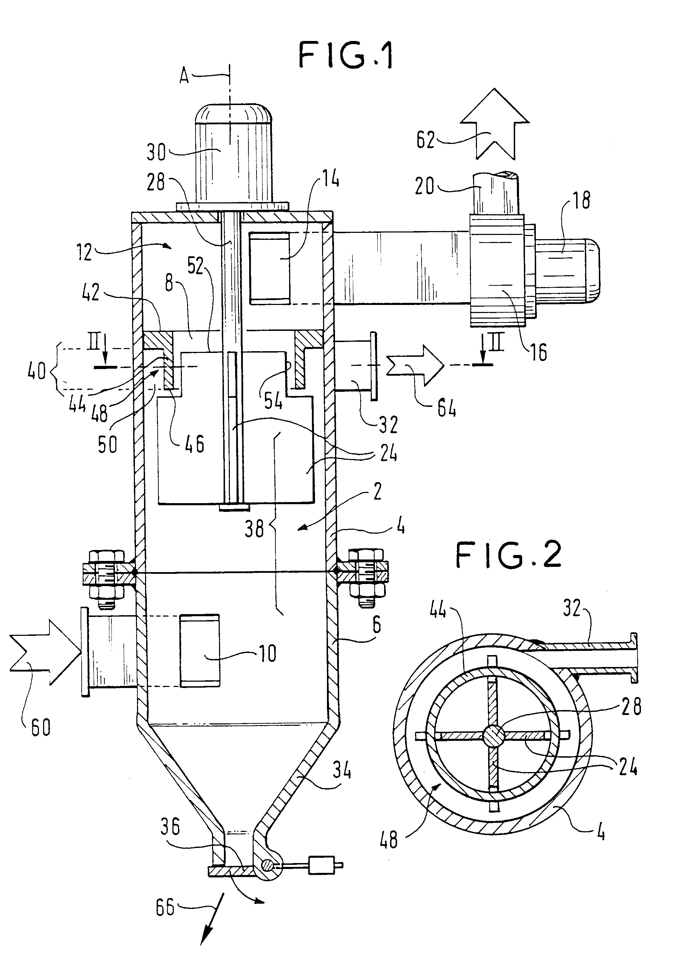

Conformément à la figure 1 le séparateur comporte une chambre de centrifugation 2 ayant une paroi de confinement cylindrique 4 et présentant un axe vertical A qui définit ladite direction longitudinale. Cette chambre s'étend d'une extrémité basse 6 à une extrémité haute 8. Elle présente :
- une ouverture d'entrée 10 pour une entrée tangentielle du flux gazeux chargé,
- et une ouverture de sortie constituée par l'extrémité haute 8. Cette dernière ouverture communique avec une enceinte de sortie 12 dont le flux gazeux est extrait pour parvenir, à travers une sortie tangentielle 14 et un ventilateur de sortie 16, à une sortie de séparateur 20. Ce ventilateur est entraîné par un moteur 18 pour aspirer ledit gaz vecteur. Il constitue des moyens de circulation pour faire circuler ce gaz de ladite ouverture d'entrée à ladite ouverture de sortie en présentant une composante de vitesse longitudinale dans un sens direct qui est le sens ascendant.

L'épurateur comporte en outre des moyens de rotation constitués par un rotor d'entraînement qui comporte des pales 24 fixées sur un arbre 28 pour être entraînées en rotation autour de l'axe A. Ces pales présentent sensiblement la forme de plaques présentant une longueur parallèle à cet axe et des largeurs disposées radialement. Ce rotor est muni d'un moteur 30 tournant par exemple à 3000 ou 5000 tours par minute pour faire apparaître, au bord périphérique desdites pales d'entraînement, une accélération centripète comprise entre 500 et 20 000 fois l'accélération de la pesanteur g.

Les moyens d'évacuation comportent une ouverture d'évacuation 32 qui sera mieux décrite plus loin. Ils comportent aussi :
- une trémie 34 de recueil de particules lourdes formée au-dessous de ladite ouverture d'entrée pour recueillir des particules lourdes qui ont été décantées par la force centrifuge et la gravité dans ledit tronçon de décantation,
- et des moyens d'évacuation de particules lourdes 36 pour permettre d'extraire les particules lourdes ainsi recueillies sans introduire d'air dans cette chambre pendant le fonctionnement desdits moyens de circulation et de rotation. Ces moyens d'évacuation de particules lourdes comportent par exemple un bouchon 36 qui obture le fond de la trémie 34 pendant le fonctionnement de l'épurateur, et qui est enlevé, après arrêt de l'épurateur, lorsqu'une quantité excessive de particules lourdes s'est accumulée.

Deux tronçons de décantation et de séparation 38 et 40 respectivement s'étendent et se succèdent longitudinalement dans la longueur de la chambre de centrifugation.

Un dispositif de séparation constitue un obstacle périphérique et comporte :
- un anneau d'arrêt 42 disposé en saillie intérieure sur la paroi de ladite chambre de centrifugation,
- et un séparateur de veines 44 s'étendant longitudinalement vers l'amont à partir du bord intérieur de cet anneau jusqu'à un bord séparateur 46. Il forme ainsi entre ce séparateur et la paroi de centrifugation 4, une chambre d'évacuation annulaire 48 présentant une ouverture annulaire 50 vers l'amont pour recevoir ladite veine gazeuse périphérique, et au moins une ouverture périphérique 32 pour constituer ladite ouverture d'évacuation.

Le fait que le ventilateur 16 est disposé en aval du bord séparateur 46 permet de donner au gaz de ladite veine gazeuse centrale dans une section de cette veine passant par ce bord, une pression absolue moyenne relativement faible et de préférence inférieure d'au moins 10 % à ladite pression d'extraction.

Les pales d'entraînement 24 s'étendent principalement en amont du bord séparateur 46. Elles comportent des prolongements 52 en aval de ce bord séparateur de manière à donner, à une partie périphérique du gaz de ladite veine gazeuse interne passant au voisinage de ce bord, une pression périphérique voisine de ladite pression d'extraction et sensiblement supérieure à une pression centrale régnant dans la partie centrale de la même section de cette veine.

Leurs bords externes passent à une distance petite du bord séparateur 46. Cette distance est de préférence inférieure à 10 % et de préférence encore inférieure à 4 % du diamètre de ce bord. Ils présentent des encoches 54 pour ne pas entrer en contact avec le dispositif de séparation 42, 44.

Des flèches 60, 62, 64 et 66 représentent respectivement le flux d'entrée, le flux épuré en sortie de l'épurateur, un flux de sortie concentré en particules fines et constitué à partir de la veine gazeuse périphérique, et l'évacuation intermittente des particules lourdes.

Les dispositions décrites ci-dessus permettent l'extraction de particules très fines et elles présentent notamment l'avantage que toutes les surfaces obtenues par chaudronnerie, notamment les pales 24, surtout si elles présentent la forme de plaques, peuvent être réalisées aisément en un matériau résistant à l'abrasion et/ou être revêtues par un tel matériau, notamment sous la forme de plaques d'usure.

## Revendications

1. Epurateur centrifuge pour flux gazeux, ledit épurateur comportant :
- une chambre de centrifugation (2) délimitée par une paroi de confinement cylindrique (4) qui est de révolution autour d'un axe (A) de direction longitudinale, ladite chambre ayant une longueur s'étendant selon cet axe (A) dans un sens direct d'une extrémité amont (6) vers une extrémité aval (8);
- une ouverture d'entrée (10) formée à ladite extrémité amont (6) pour recevoir un flux gazeux d'entrée (60) constitué d'un gaz vecteur chargé de particules qui doivent en être extraites;
- une ouverture de sortie (8) formée à ladite extrémité aval pour restituer un flux gazeux épuré;
- des moyens de circulation (16) pour faire circuler ledit gaz vecteur de ladite ouverture d'entrée (10) à ladite ouverture de sortie (8) dans ladite chambre de centrifugation, pour former un flux gazeux interne ayant une composante de vitesse longitudinale dans ledit sens direct;
- des moyens de rotation (24) pour appliquer une rotation audit flux gazeux interne autour dudit axe (A) et pour faire ainsi apparaître une force centrifuge qui rassemble lesdites particules au voisinage de ladite paroi de confinement (4) dans un tronçon de décantation centrifuge (38) s'étendant sur une fraction de la longueur de ladite chambre de centrifugation (2);
- et une ouverture d'évacuation (32) pour les particules qui ont été ainsi rassemblées au voisinage de ladite paroi de confinement (4);
ledit épurateur étant caractérisé par le fait qu'il comporte également un dispositif de séparation (42, 44) disposé à l'extrémité aval dudit tronçon de décantation centrifuge (38) en saillie radiale vers l'intérieur de ladite chambre de centrifugation (2) et en aval desdits moyens de rotation (24) pour séparer d'une part une veine gazeuse périphérique constituée par une fraction dudit flux gazeux interne circulant au voisinage de ladite paroi de confinement et enrichie en lesdites particules par la force centrifuge, d'autre part une veine gazeuse interne constituée par le reste dudit flux gazeux interne, ladite ouverture d'évacuation (32) étant formée dans ladite paroi de confinement (4) pour permettre la sortie de ladite veine gazeuse périphérique, ladite ouverture de sortie de l'épurateur étant disposée pour permettre la sortie de ladite veine gazeuze interne.

2. Epurateur selon la revendication 1, caractérisé par le fait que lesdits moyens de rotation (24) constituent en même temps des moyens de compression centrifuge aptes à donner audit gaz vecteur de ladite veine gazeuse périphérique une pression d'extraction suffisante pour assurer l'extraction de ce gaz à travers ladite ouverture d'évacuation vers un espace récepteur de particules.

3. Epurateur selon la revendication 2, caractérisé par le fait que ladite pression d'extraction est une pression absolue positive par rapport à l'atmosphère.

4. Epurateur selon la revendication 2, caractérisé par le fait que ledit dispositif de séparation comporte :
- un anneau d'arrêt (42) disposé en saillie intérieure sur la paroi de ladite chambre de centrifugation,
- et un séparateur de veines (44) s'étendant longitudinalement vers l'amont à partir du bord intérieur de cet anneau jusqu'à un bord séparateur (46) pour former entre ce séparateur et ladite paroi de centrifugation (4), une chambre d'évacuation annulaire (48) présentant une ouverture annulaire (50) vers l'amont pour recevoir ladite veine gazeuse périphérique, et au moins une ouverture périphérique (32) pour constituer ladite ouverture d'évacuation.

5. Epurateur selon la revendication 4, caractérisé par le fait que lesdits moyens de circulation comportent un ventilateur de sortie (16) disposé en aval dudit bord séparateur (46) de manière à donner au gaz de ladite veine gazeuse interne dans une section de cette veine passant par ce bord, une pression absolue moyenne inférieure d'au moins 10 % à ladite pression d'extraction.

6. Epurateur selon la revendication 4, caractérisé par le fait que lesdits moyens de rotation comportent un rotor d'entraînement tournant autour dudit axe (A) et comportant des pales d'entraînement en amont dudit bord séparateur (46).

7. Epurateur selon la revendication 6, caractérisé par le fait que lesdites pales d'entraînement comportent des prolongements (52) en aval de ce bord séparateur (46) de manière à donner, à une partie périphérique du gaz de ladite veine gazeuse interne passant au voisinage de ce bord, une pression périphérique voisine de ladite pression d'extraction et sensiblement supérieure à une pression centrale régnant dans la partie centrale de la même section de cette veine.

8. Epurateur selon la revendication 7, caractérisé par le fait qu'un bord externe de certaines au moins desdites pales d'entraînement (24) passe à une distance petite dudit bord séparateur (46), cette distance étant de préférence inférieure à 10 % et de préférence encore inférieure à 4 % du diamètre de ce bord.

9. Epurateur selon la revendication 1, caractérisé par le fait que lesdits moyens de rotation comportent des pales d'entraînement (24) tournant autour dudit axe (A) et présentant sensiblement la forme de plaques ayant des longueurs parallèles audit axe (A) et des largeurs disposées radialement.

10. Epurateur selon la revendication 9, caractérisé par le fait que lesdites pales d'entraînement (24) sont mues par un moteur (30) propre à faire apparaître, sur leur bord périphérique, une accélération centripète comprise entre 500 et 20 000 fois l'accélération de la pesanteur g.

11. Epurateur selon la revendication 1, caractérisé par le fait que ladite chambre de centrifugation (2) comporte :
- une trémie (34) de recueil de particules formée au-dessous de ladite ouverture d'entrée (10) pour recueillir des particules qui ont été décantées par la gravité à partir de ladite veine périphérique,
- et des moyens d'évacuation de particules (36) pour permettre d'extraire les particules ainsi recueillies.

12. Epurateur selon la revendication 1, caractérisé par le fait que la disposition en saille radiale du dispositif de séparation (42,44) est telle que, lors de l'utilisation, une fraction minoritaire du débit dudit gaz vecteur constitue ladite veine gazeuse périphérique.

## Claims

1. A centrifugal purifier for a gas flow, said purifier comprising:
a centrifuge chamber (2) delimited by a cylindrical confinement wall (4) which is circularly symmetrical about a longitudinal axis (A), said chamber having a length extending along said axis (A) in a forwards direction from an upstream end (6) towards a downstream end (8);
an inlet opening (10) formed at said upstream end (6) to receive an inlet gas flow (60) constituted by a carrier gas contaminated with particles that are to be removed therefrom;
an outlet opening (8) formed at said downstream end for delivering a purified gas flow;
flow means (16) for causing said carrier gas to flow from said inlet opening (10) to said outlet opening (8) in said centrifuge chamber, thereby forming an internal gas flow having a longitudinal velocity component in said forwards direction;
spin means (24) for imparting rotation to said internal gas flow around said axis (A), thereby causing centrifugal force to appear and concentrate said particles in the vicinity of said confinement wall (4) in a centrifugal deposition length (38) extending over a fraction of the length of said centrifuge chamber (2); and
a removal opening (32) for the particles which have been concentrated in this manner in the vicinity of said confinement wall (4);
said purifier being characterized by the fact that it also includes a separator device (42, 44) disposed at the downstream end of said centrifugal deposition length (38), projecting radially into said centrifuge chamber (2) and downstream of said spin means (24) in order to separate firstly a peripheral gas stream constituted by a fraction of said internal gas flow circulating in the vicinity of said confinement wall and enriched in said particles by the centrifugal force, and secondly an internal gas stream constituted by the remainder of said internal gas flow, said removal opening (32) being formed in said confinement wall (4) to allow said peripheral gas stream to be output, said output opening of the purifier being disposed to allow said internal gas stream to be output.

2. A purifier according to claim 1, characterized by the fact that said
said spin means (24) simultaneously constituting centrifuge compressor means suitable for imparting sufficient extraction pressure to said carrier gas of said peripheral gas stream to ensure that said gas is extracted through said removal opening into said particle-receiving space.

3. A purifier according to claim 2, characterized by the fact that said extraction pressure is an absolute pressure that is positive relative to atmospheric pressure.

4. A purifier according to claim 2, characterized by the fact that said separator device comprises:
a stop ring (42) disposed projecting inwards from the wall of said centrifuge chamber; and
a stream separator (44) extending longitudinally in an upstream direction from the inside edge of said ring to a separator edge (46), thereby forming an annular evacuation chamber (48) between said separator and said centrifuge wall (4), the annular evacuation chamber having an annular opening (50) facing upstream to receive said peripheral gas stream, and at least one peripheral opening (32) to constitute said removal opening.

5. A purifier according to claim 4, characterized by the fact that said flow means comprise an outlet fan (16) disposed downstream from said separator edge (46) so as to impart a mean absolute pressure to the gas in said inner gas stream in a section of said stream passing said edge, which mean absolute pressure is at least 10% less than said extraction pressure.

6. A purifier according to claim 4, characterized by the fact that said spin means comprise a drive motor rotating about said axis (A) and including drive blades upstream from said separator edge (46).

7. A purifier according to claim 6, characterized by the fact that said drive blades include extensions (52) downstream from said separator edge (46), thereby imparting a peripheral pressure to a peripheral portion of the gas of said inner gas stream passing in the vicinity of said edge, said peripheral pressure being close to said extraction pressure and substantially greater than a central pressure which exists in the central portion of the same section of said stream.

8. A purifier according to claim 7, characterized by the fact that outer edges of at least some of said drive blades (24) pass at a small distance from said separator edge (46), said distance being preferably less than 10% and even more preferably less than 4% of the diameter of said edge.

9. A purifier according to claim 1, characterized by the fact that said spin means include drive blades (24) rotating about said axis (A), with each blade being substantially in the form of a plate whose length extends parallel to said axis (A) and whose width is disposed radially.

10. A purifier according to claim 9, characterized by the fact that said drive blades (24) are driven by a motor (30) suitable for causing centripetal acceleration to appear at their peripheral edges in the range 500 times to 20,000 times the acceleration due to gravity (g).

11. A purifier according to claim 1, characterized by the fact that said centrifuge chamber (2) includes:
a particle collecting funnel (34) formed beneath said inlet opening (10) for collecting particles that have been deposited by gravity from said peripheral stream; and
particle removal means (36) for enabling particles collected in this way to be extracted.

12. A purifier according to claim 1, characterized by the fact that the radially projecting disposition of the separator device (42, 44) is such that, in use, a minority fraction of said carrier gas flow constitutes said peripheral gas stream.

## Patentansprüche

1. Reinigungszentrifuge für einen Gasstrom
- mit einer Zentrifugierkammer (2), die durch eine um eine Achse (A) in Längsrichtung drehsymmetrische zylindrische Wand (4) begrenzt ist, wobei die Längsrichtung der Kammer sich entlang dieser Achse (A) in einer direkten Richtung von einem Einlaßende (6) zu einem Auslaßende (8) erstreckt,
- mit einer Einlaßöffnung (10), die am Einlaßende (6) ausgebildet ist, um einen Einlaßgasstrom (60) zu empfangen, der aus einem mit Partikeln angereicherten Trägergas besteht, die daraus entfernt werden müssen,
- mit einer Auslaßöffnung (8), die am Auslaßende ausgebildet ist, um einen gereinigten Gasstrom abzugeben,
- mit Antriebsmitteln (16), um das Trägergas von der Einlaßöffnung (10) zur Auslaßöffnung (8) in die Zentrifugierkammer zu fördern und um einen inneren Gasfluß zu bilden, der eine Längsgeschwindigkeitskomponente in der direkten Richtung hat,
- mit Zentrifugiermitteln (24), um dem inneren Gasfluß eine Drehung um die Achse (A) zu verleihen und um so eine Zentrifugalkraft auftreten zu lassen, die die Partikel in der Nähe der Wand (4) in einem zentrifugalen Klärabschnitt (38) sammelt, der sich über einen Bruchteil der Länge der Zentrifugierkammer (2) erstreckt,
- und mit einer Abfuhröffnung (32) für die Partikel, die sich in der Nähe der Wand (4) gesammelt haben,
dadurch gekennzeichnet, daß weiter ein Strömungsteiler (42, 44) vorgesehen ist, der am hinteren Ende des zentrifugalen Klärabschnitts (38) radial ins Innere der Zentrifugierkammer (2) vorspringend und hinter den Zentrifugiermitteln (24) angeordnet ist, um einen peripheren Gasstrom bestehend aus einem in der Nähe der Wand fließenden und mit den Partikeln durch die Zentrifugalkraft angereicherten Bruchteil des inneren Gasflusses von einem inneren Gasstrom bestehend aus dem Rest des inneren Gasflusses zu trennen, wobei die Abfuhröffnung (32) in der Wand (4) ausgebildet ist, um den peripheren Gasstrom abzuführen, während die Auslaßöffnung für gereinigtes Gas so angeordnet ist, daß sie die Abfuhr des inneren Gasstroms erlaubt.

2. Zentrifuge nach Anspruch 1, dadurch gekennzeichnet, daß die Zentrifugiermittel (24) gleichzeitig Mittel zur zentrifugalen Kompression bilden, die dem Trägergas des peripheren Gasstroms einen ausreichenden Entnahmedruck verleihen können, um die Abfuhr dieses Gases durch die Abfuhröffnung zu einem Partikelauffangbehälter zu bewirken.

3. Zentrifuge nach Anspruch 2, dadurch gekennzeichnet, daß der Entnahmedruck ein in Bezug auf die Atmosphäre positiver Absolutdruck ist.

4. Zentrifuge nach Anspruch 2, dadurch gekennzeichnet, daß der Strömungsteiler aufweist:
- einen Stoppring (42), der nach innen vorspringend auf der Wand der Zentrifugierkammer angeordnet ist,
- und eine Trennvorrichtung (44), die sich in Längsrichtung ausgehend vom Innenrand dieses Rings bis zu einem Separationsrand (46) nach vorne erstreckt, um zwischen dieser Trennvorrichtung und der Zentrifugierwand (4) eine ringförmige Abfuhrkammer (48) zu bilden, die nach vorne eine ringförmige Öffnung aufweist, um den peripheren Gasstrom aufzunehmen, und mindestens eine periphere Öffnung (32), die die Abfuhröffnung bildet.

5. Zentrifuge nach Anspruch 4, dadurch gekennzeichnet, daß die Antriebsmittel ein Auslaßgebläse (16) enthalten, das hinter dem Separationsrand (46) derart angeordnet ist, daß er dem Gas des inneren Gasstroms in einem Abschnitt dieses Stroms, der über diesen Rand verläuft, einen mittleren Absolutdruck verleiht, der um mindestens 10% unter dem Entnahmedruck liegt.

6. Zentrifuge nach Anspruch 4, dadurch gekennzeichnet, daß die Zentrifugiermittel einen Antriebsrotor aufweisen, der um die Achse (A) dreht und der Antriebsschaufeln vor dem Separationsrand (46) aufweist.

7. Zentrifuge nach Anspruch 6, dadurch gekennzeichnet, daß die Antriebsschaufeln Verlängerungen (52) jenseits dieses Separationsrands (46) aufweisen, um einen peripheren Teil des Gases des inneren Gasstroms, der in der Nähe dieses Rands verläuft, einen peripheren Druck nahe dem Entnahmedruck zu verleihen, der wesentlich höher als ein zentraler Druck ist, der im zentralen Bereich des gleichen Abschnitts dieser Strömung herrscht.

8. Zentrifuge nach Anspruch 7, dadurch gekennzeichnet, daß ein äußerer Rand zumindest einiger dieser Antriebsschaufeln (24) in geringem Abstand zum Separationsrand (46) verläuft, wobei dieser Abstand vorzugsweise geringer als 10% und noch vorzugsweise geringer als 4% des Durchmessers dieses Rands ist.

9. Zentrifuge nach Anspruch 1, dadurch gekennzeichnet, daß die Zentrifugiermittel Antriebsschaufeln (24) aufweisen, die um die Achse (A) drehen und im wesentlichen die Form von Platten aufweisen, deren Länge parallel zur Achse (A) sind und deren Breite radial verläuft.

10. Zentrifuge nach Anspruch 9, dadurch gekennzeichnet, daß die Antriebsschaufeln (24) von einem Motor (30) angetrieben werden, der auf ihrem peripheren Rand eine zentripetale Beschleunigung zwischen 500 und 20000 mal die Beschleunigung der Schwerkraft g erzeugen kann.

11. Zentrifuge nach Anspruch 1, dadurch gekennzeichnet, daß die Zentrifugierkammer (2) aufweist:
- einen Trichter (34) zur Aufnahme von Partikeln, der unterhalb der Einlaßöffnung (10) vorgesehen ist, um Partikel aufzunehmen, die durch die Schwerkraft ausgehend von dem peripheren Strom abgeschieden wurden,
- und Mittel (36) zur Abfuhr von Partikeln, um die so gesammelten Partikel entnehmen zu können.

12. Zentrifuge nach Anspruch 1, dadurch gekennzeichnet, daß die radial vorspringende Anordnung der Trennvorrichtung (42, 44) so gewählt ist, daß im Betrieb ein kleiner Bruchteil des Durchsatzes des Trägergases den peripheren Gasstrom bildet.
